# EUROPÄISCHE PATENTSCHRIFT

(11) **EP 1 453 698 B1**
(45) Veröffentlichungstag und Bekanntmachung des Hinweises auf die Patenterteilung: **03.08.2005**
(21) Anmeldenummer: 02804571.4
(22) Anmeldetag: 06.11.2002
(51) Int. Cl.: B60R 7/00

(54) **HALTENETZ ZUR ANBRINGUNG AN FLÄCHEN IM INNEN- UND/ODER KOFFERRAUM VON KRAFTFAHRZEUGEN**
RETAINING NET TO BE MOUNTED ON SURFACES IN THE COCKPIT AND/OR TRUNK OF MOTOR VEHICLES
FILET DE RETENUE DESTINE A ETRE FIXE SUR DES SURFACES SITUEES DANS L'HABITACLE ET/OU DANS LE COFFRE DE VEHICULES AUTOMOBILES

(30) Priorität: 12.12.2001 DE 20120090 U
(43) Veröffentlichungstag der Anmeldung: 08.09.2004
(73) Patentinhaber: Nölle-Pepin GmbH & Betriebs KG, 58332 Schwelm (DE)
(72) Erfinder: NÖLLE, Hans-Erich, 58332 Schwelm (DE)
(74) Vertreter: Lelgemann, Karl-Heinz
(86) Internationale Anmeldenummer: PCT/EP2002/012352
(87) Internationale Veröffentlichungsnummer: WO 2003/049973

(56) Entgegenhaltungen:
- WO-A-96/08391
- DE-A- 2 938 357
- DE-A- 4 228 260
- DE-U- 8 601 047
- DE-U- 29 617 773
- FR-A- 2 198 430

## Beschreibung

Die Erfindung bezieht sich auf ein Haltenetz nach dem Oberbegriff des Patentanspruchs 1.

Haltenetze sind im Verlauf der letzten Jahrzehnte als übliche Ausrüstungsbestandteile von Kraftfahrzeugen immer beliebter geworden. Sie dienen zur Fixierung unterschiedlichster Gegenstände an unterschiedlichsten Orten innerhalb des Innenraums und/oder des Kofferraum von Kraftfahrzeugen.

Aus der gattungsgemässen DE 29 38 357 Al ist ein Haltenetz bekannt, dessen Netzteil an zwei einander gegenüberliegenden Rändern mittels zwei Randhalterungen gehaltert ist. Die Halterung erfolgt dadurch, dass die Ecken von Randmaschen des Netzteils durch in der Randhalterung ausgebildete Ausnehmungen geführt werden, wobei dann durch diese Ecken der Randmaschen ein Band oder Draht geführt ist, der auf der dem eigentlichen Netzteil abgewandten Seite der Randhalterung angeordnet ist. Am oberen Rand des Netzteils ist ein elastisches Gummiband vorgesehen, welches an den oberen Enden der beiden Randhalterungen befestigt ist. Am unteren Rand dieses bekannten Haltenetzes ist der entsprechende Rand des Netzteils in gleicher Weise an einer Randhalterung angebracht. Der die Ecken bzw. Schlaufen der Randmaschen durchlaufende Draht ist bei der genannten Ausführungsform des Haltenetzes einstückig ausgebildet und läuft längs den beiden seitlichen Rändern und dem unteren Rand des Haltenetzes. Die Randhalterungen werden unmittelbar an der Rückwand einer Sitzlehne eines Fahrzeugs ausgebildet. Hierbei wird in die diese Rückwand ausbildende Platte eine Vielzahl der genannten Ausnehmungen eingebracht, durch diese hindurch werden die Ecken bzw. Schlaufen der Randmaschen gesteckt, wonach auf der Innenseite dieser Wand ein Band, Draht od.dgl. durch die zur Innenseite hin vorstehenden Ecken bzw. Schlaufen geführt wird.

Der Erfindung liegt die Aufgabe zugrunde, ein Haltenetz der vorstehend geschilderten Art derart weiterzubilden, dass es einfacher montierbar und austauschbar ist und darüber hinaus zur Abtrennung von Raumabschnitten im Innen- und/oder Kofferraum von Kraftfahrzeugen eingesetzt werden kann.

Diese Aufgabe wird erfindungsgemäß durch die Merkmale im kennzeichnenden Teil des Patentanspruchs 1 gelöst.

Hierdurch ergibt sich eine in einfacher Weise gestaltbare Fixiermöglichkeit der Ränder des Netzteils in den Kunststoffleisten, die ihrerseits mit einem vergleichsweise geringen Aufwand an einer beliebigen Montagefläche innerhalb des Koffer- oder Innenraums des Kraftfahrzeugs befestigbar sind. Allein durch das Zusammenwirken des Drahts mit der entsprechend gestalteten Kunststoffleiste ist eine wenig aufwendige und das Netzteil des Haltenetzes in exakter Position halternde Anbringung des Netzteils an der Kunststoffleiste ohne weiteres möglich.

Zur Fixierung des Drahtes in Bezug auf die Kunststoffleiste ist eine Ausgestaltung gemäß Patentanspruch 2 hilfreich, wobei die Clipshalterungen zweckmäßigerweise zwischen den die Außenecken der Randmaschen aufnehmenden Ausnehmungen angeordnet sind.

Gemäß Patentanspruch 3 kann die Flächenerstreckung des Netzteils hierbei sowohl parallel zur Basis der Kunststoffleisten als auch senkrecht zur Basis der Kunststoffleisten orientiert sein.

Um die beiden elastischen Zugglieder, durch welche die beiden anderen einander gegenüberliegenden Ränder des Netzteils gebildet werden, mit einem vergleichsweise geringen technischkonstruktiven Aufwand mit den Kunststoffleisten zu verbinden, ist eine Ausgestaltung gemäß Patentanspruch 4 zweckmäßig. Hierdurch ergibt sich eine dauerhaft zuverlässige Fixierung der Enden der elastischen Zugglieder innerhalb der Kunststoffleisten.

Ein Herausrutschen des Drahtes insbesondere aus der Außenecke der obersten oder der untersten Randmasche des Netzteils läßt sich bei der Weiterbildung gemäß Patentanspruch 5 zuverlässig verhindern.

Bei der vorteilhaften Weiterbildung gemäß Patentanspruch 6 ist es auch möglich, dass beide Kunststoffleisten des Haltenetzes in einem der genannten Profile realisiert sind.

Um in jeder Höhe ein geschlossenes Netz ausgestalten zu können, ist die Ausgestaltung gemäß Patentanspruch 7 zweckmäßig.

Im folgenden wird die Erfindung anhand einer Ausführungsform unter Bezugnahme auf die Zeichnung näher erläutert.

Es zeigen:
Figur 1 eine Rückansicht einer Ausführungsform eines erfindungsgemäßen Haltenetzes; und
Figur 2 eine Rückansicht einer Kunststoffleiste des in Figur 1 gezeigten erfindungsgemäßen Haltenetzes.

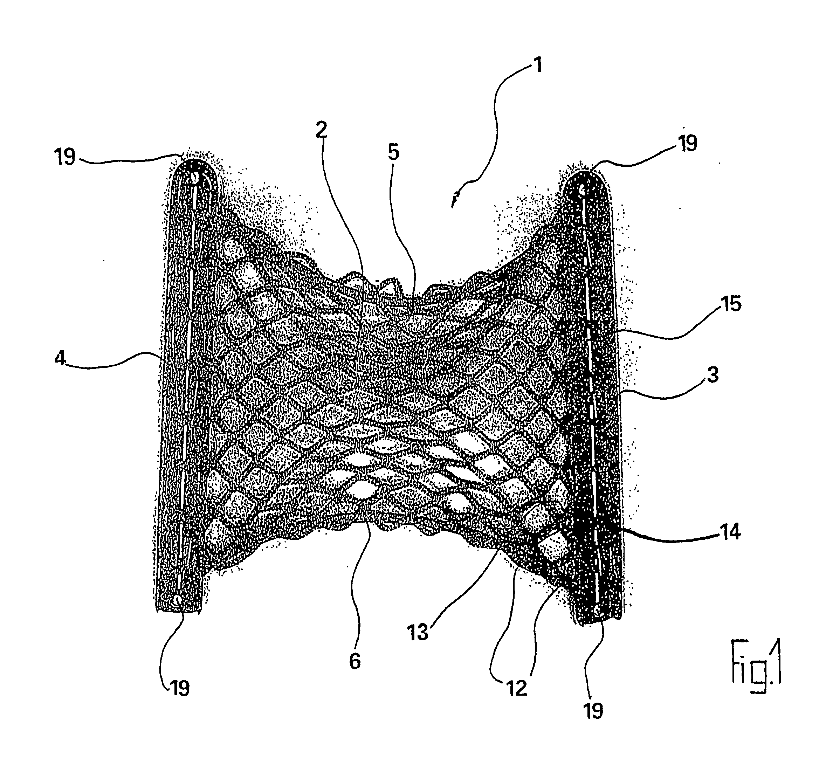

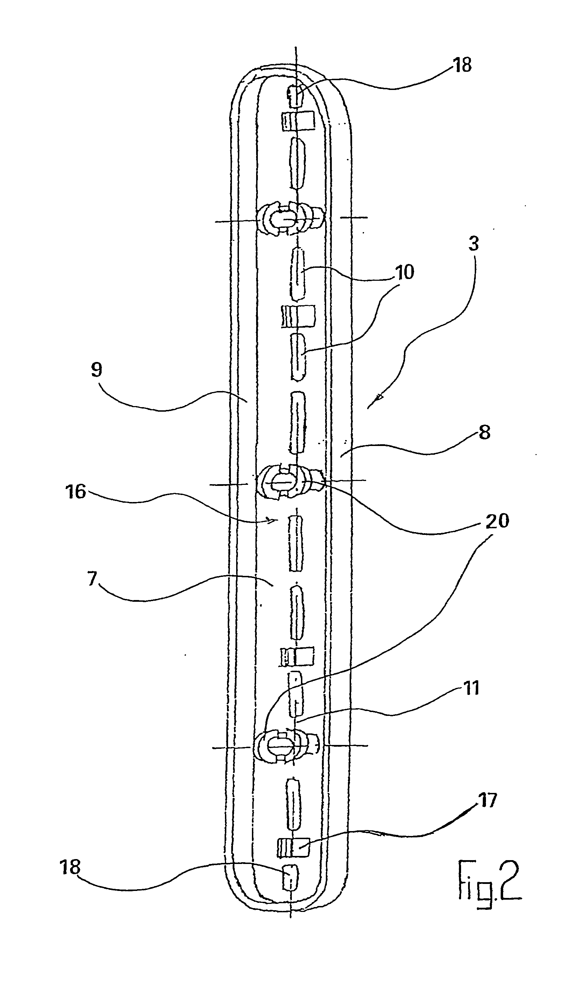

Ein anhand der Figuren 1 und 2 im folgenden näher erläutertes erfindungsgemäßes Haltenetz 1 ist dazu bestimmt, im Innen- oder Kofferraum von Kraftfahrzeugen od.dgl. angebracht zu werden, wobei es dazu dient, Gegenstände beliebiger Art zu haltern bzw. zu fixieren.

Das Haltenetz 1 hat ein im dargestellten Ausführungsbeispiel vierseitiges Netzteil 2, wobei an den beiden einander gegenüberliegenden, sich in Figur 1 senkrecht erstreckenden Rändern des Netzteils 2 jeweils eine Kunststoffleiste 3, 4 angeordnet ist.

Die beiden Kunststoffleisten 3, 4 entsprechen einander hinsichtlich ihrer Funktion und Ausgestaltung, so daß im folgenden, sofern auf Einzelheiten der Kunststoffleisten 3, 4 eingegangen wird, nur auf die in Figur 2 in Rückansicht dargestellte Kunststoffleiste 3 Bezug genommen wird.

Zwischen den beiden oberen Enden der Kunststoffleisten 3, 4 und den beiden unteren Enden der Kunststoffleisten 3, 4 erstreckt sich jeweils ein elastisches Zugglied 5 bzw. 6, welches den oberen zw. den unteren Rand des Netzteils 2 bzw. des Haltenetzes 1 bildet. Die beiden elastischen Zuggliedern 5, 6 sind in noch zu beschreibender Weise mit ihren Enden an den diesen jeweils zugeordneten Enden der Kunststoffleisten 3 bzw. 4 angebracht.

Wie sich aus der Darstellung gemäß Figur 2 ergibt, weisen die beiden Kunststoffleisten 3, 4 jeweils einen U-förmigen Querschnitt mit einer Basis 7 und zwei Schenkeln 8, 9 auf.

In der Basis 7 der Kunststoffleiste 3 sind langlochartige Ausnehmungen 10 vorgesehen. Die langlochartigen Ausnehmungen 10 sind miteinander fluchtend auf einer vertikalen Mittellinie 11 der Basis 7 der Kunststoffleiste 3 angeordnet.

Durch jede dieser Ausnehmungen 10 stehen zwei eine Außenecke einer Randmasche 12 des Netzteils 2 ausbildende Netzstränge 13, 14 in den durch die Basis 7 und die Schenkel 8, 9 der Kunststoffleiste 3 gebildeten Innenraum derselben vor.

Die in den Innenraum der Kunststoffleiste 3 vorstehenden, durch die Netzstränge 13, 14 gebildeten Außenecken der Randmaschen 12 des Netzteils 2 werden durch einen in Figur 1 gezeigten Draht 15 durchragt, der sich über den gesamten Bereich der vertikalen Mittellinie 11 der Kunststoffleiste 3 erstreckt, über den Netzstränge 13, 14 aufnehmende Ausnehmungen 10 vorgesehen sind.

Zur Fixierung des Drahtes 15 an der Innenseite der Basis 7 der Kunststoffleiste 3 sind dort Clipshalterungen 17 ausgebildet, die zwischen zwei Ausnehmungen 10 auf der Innenseite 16 der Kunststoffleiste 3 an der vertikalen Mittellinie 11 von deren Basis 7 ausgebildet sind.

Zur Fixierung der Enden der beiden elastischen Zugglieder 5, 6 sind oberhalb der obersten Ausnehmung 10 bzw. unterhalb der untersten Ausnehmung 10 in den Endabschnitten der Kunststoffleisten 3, 4 Durchlässe 18 ausgebildet. Durch diese Durchlässe 18 stehen die Enden der elastischen Zugglieder 5, 6 in den durch die Basis 7 und die Schenkel 8, 9 der Kunststoffleiste 3 gebildeten Innenraum der Kunststoffleiste 3 vor. Die Fixierung der Enden der elastischen Zugglieder 5, 6 erfolgt mittels Halteköpfen 19, die das Ende der elastischen Zugglieder 5, 6 bilden und deren Durchmesser größer ist als der der Durchlässe 18.

Im dargestellten Ausführungsbeispiel sind die Durchlässe 18 und daraus resultierend die Halteköpfe 19 unmittelbar unterhalb bzw. oberhalb von der Halterung des Drahtes 15 dienenden Clipshalterungen 17 auf der vertikalen Mittellinie 11 der Basis 7 der Kunststoffleiste 3 angeordnet. Hierdurch wird verhindert, daß der Draht 15 in Vertikalrichtung so verrutscht, daß er die Außenecke einer Randmasche 12 des Netzteils 2 nicht mehr durchgreift.

Die Kunststoffleisten 3, 4 weisen Clipsverbindungen 20 auf, mittels denen sie an den für sie vorgesehenen Montageflächen anbringbar sind.

Bei bestimmten Einsatzorten des Haltenetzes 1 ist es zweckmäßig, wenn das untere elastische Zugglied 6 so ausgebildet ist, daß es in geeigneter Weise an der Montagefläche fixierbar ist, so daß sich ein unten geschlossenes Haltenetz 1 ergibt.

## Patentansprüche

1. Haltenetz zur Anbringung an Flächen im Innen- und/oder Kofferraum von Kraftfahrzeugen,
mit einem Netzteil (2),
zwei Randhalterungen (3, 4), die an einander gegenüberliegenden Rändern des Netzteils (2) angeordnet sind und für jede Randmasche (12) am ihnen zugeordneten Rand des Netzteils (2) eine Ausnehmung (10) aufweisen, in die die beiden die Außenecke der Randmasche (12) ausbildenden Netzstränge (13, 14) einführbar und die in den Randhalterungen (3, 4) gleich beabstandet neben- bzw. untereinander angeordnet sind,
einem elastischen Zugglied (5), das an einem ersten anderen Rand des Netzteils (2) angeordnet und an beiden Randhalterungen (3, 4) angebracht ist,
und einem Draht (15), der auf der dem Netzteil (2) abgewandten Innenseite (16) jeder Randhalterung (3, 4) angeordnet ist, sich entlang den in der Randhalterung (3, 4) ausgebildeten Ausnehmungen (10) erstreckt und die Außenecken der Randmaschen (12) des Netzteils (2) durchgreift,
**dadurch gekennzeichnet,**
**dass** die beiden Randhalterungen als einstückige Kunststoffleisten (3, 4) ausgebildet sind, die einen etwa U-förmigen Querschnitt aufweisen,
und **dass** ein zweites elastisches Zugglied (6) am zweiten anderen Rand des Netzteils angeordnet und an den Kunststoffleisten (3, 4) angebracht ist.

2. Haltenetz nach Anspruch 1, bei dem auf der Innenseite (16) der Kunststoffleiste (3, 4) Clipshalterungen (17) ausgebildet sind, mittels denen der die Außenecken der Randmaschen (12) auf der Innenseite (16) der Kunststoffleiste (3, 4) fixierende Draht (15) seinerseits fixierbar ist.

3. Haltenetz nach Anspruch 1 oder 2, bei dem die in der Kunststoffleiste (3, 4) ausgebildeten Ausnehmungen (10) etwa mittig in der Basis (7) des U-förmigen Querschnitts der Kunststoffleiste (3, 4) angeordnet sind.

4. Haltenetz nach einem der Ansprüche 1 bis 3, bei dem in beiden Kunststoffleisten (3, 4) oberhalb der obersten und unterhalb der untersten Ausnehmung (10) jeweils ein Durchlass (18) ausgebildet ist, durch den hindurch das dem entsprechenden Endabschnitt der Kunststoffleiste (3, 4) zugeordnete Ende des jeweiligen Zugglieds (5, 6) in den durch den U-Querschnitt gebildeten Innenraum der Kunststoffleiste (3, 4) vorsteht, wobei jedes Ende jedes Zugglieds (5, 6) innerhalb des durch den U-Querschnitt gebildeten Innenraums der Kunststoffleiste (3, 4) mit einem Haltekopf (19) versehen ist, dessen Durchmesser größer als der des Durchlasses (18) ist.

5. Haltenetz nach Anspruch 4, bei dem die Anordnung der beiden Durchlässe (18) einer Kunststoffleiste (3, 4) und die Länge des der Kunststoffleiste (3, 4) zugeordneten Drahtes (15) so gewählt sind, dass der Draht (15) mittels der den beiden Durchlässen (18) zugeordneten Halteköpfe (19) in seiner Längsrichtung in dem die Ausnehmungen (10) aufweisenden Bereich der Kunststoffleiste (3, 4) fixierbar ist.

6. Haltenetz nach einem der Ansprüche 1 bis 5, bei dem zumindest eine der beiden Kunststoffleisten (3, 4) Bestandteil eines im Kraftfahrzeug vorgesehenen Kunststoffprofilteils, z.B. eines Sitzprofils, Lehnenprofils, Querwandprofils, Türprofils od.dgl. ist.

7. Haltenetz nach einem der Ansprüche 1 bis 6, bei dem ein durch eines der elastischen Zugglieder (5, 6) gebildeter Rand des Haltenetzes (1) an einer Anbringungsfläche fixierbar ausgestaltet ist.

## Claims

1. A cargo net that attaches to surfaces in the interior and/or the trunk of automotive vehicles,
with a piece of netting (2),
two edge retaining means (3, 4) that are disposed on opposite edges of said piece of netting (2) and comprise a recess (10) for each selvedge loop (12) on the associated edge of said piece of netting (2), said recesses serving for receiving the two net strings (13, 14) forming the outer corner of the selvedge loop (12) and being disposed at regular intervals side by side or one beneath the other in the edge retaining means (3, 4),
an elastic pull member (5) that is disposed on a first other edge of the piece of netting (2) and is attached to the two edge retaining means (3, 4),
and a wire (15) that is disposed on the inner side (16) of each edge retaining means (3, 4) turned away from said piece of netting (2), extends along the recesses (10) formed in the edge retaining means (3, 4) and is threaded through the outer corners of the selvedge loops (12) of said piece of netting (2),
**characterized in**
**that** said two edge retaining means are configured to be plastic strips (3, 4) made from one piece and comprising an approximately U-shaped cross section,
and **that** a second elastic pull member (6) is disposed on the second other edge of said piece of netting and is attached to said plastic strips (3, 4).

2. The cargo net as set forth in claim 1, wherein holding clips (17) for fixing the wire (15) are formed on the inner side (16) of the plastic strip (3, 4), said wire in turn fixing the outer corners of the selvedge loops (12) onto the inner side (16) of said plastic strip (3, 4).

3. The cargo net as set forth in claim 1 or 2, wherein the recesses (10) formed in the plastic strip (3, 4) are disposed approximately in the center of the base segment (7) of the U-shaped cross section of said plastic strip (3, 4).

4. The cargo net as set forth in any of the claims 1 through 3, wherein a passage (18) is formed in the two plastic strips (3, 4) above the uppermost and beneath the lowermost recess (10) respectively, through which passage the end of the respective one of the pull members (5, 6) associated with the corresponding end portion of said plastic strip (3, 4) projects into the interior of said plastic strip (3, 4) formed by the U-shaped cross section, with each end of each pull member (5, 6) inside the interior of said plastic strip (3, 4) which is formed by the U-shaped cross section being provided with a retaining head (19) the diameter of which is larger than that of the passage (18).

5. The cargo net as set forth in claim 4, wherein the arrangement of the two passages (18) in a plastic strip (3, 4) and the length of the wire (15) associated with said plastic strip (3, 4) are selected so that said wire (15) is fixable in its longitudinal direction in the region of said plastic strip (3, 4) comprising the recesses (10) by means of the retaining heads (19) associated with said two passages (18).

6. The cargo net as set forth in any one of the claims 1 through 5, wherein at least one of the two plastic strips (3, 4) is a constituent part of a plastic profile provided for in the automotive vehicle, e.g., a seat profile, a seat back profile, a transverse wall profile, a door profile or the like.

7. The cargo net as set forth in any one of the claims 1 through 6, wherein an edge of the cargo net (1), which is formed by one of the elastic pull members (5, 6), is implemented to be fixable to an attachment surface.

## Revendications

1. Filet de retenue destiné à être attaché à des surfaces dans l'habitacle et/ou le coffre d'un véhicule automobile,
avec une partie filet (2)
deux fixations (3, 4) en bordure du filet qui sont disposées sur des bords opposés de la partie filet (2) et qui comportent pour chaque maille lisière (12) sur le bord de la partie filet (2) qui leur est associé un évidement (10) dans lequel sont aptes à être introduits les deux brins (13, 14) du filet formant le bord externe de la maille lisière (12), ces évidements étant régulièrement espacés et disposés l'un à côté de l'autre ou l'un en dessous de l'autre dans les fixations (3, 4) en bordure du filet,
un organe de traction (5) élastique qui est disposé sur un premier bord de la partie filet (2) différent desdits bords opposés et est attaché aux deux fixations (3, 4) en bordure du filet,
et un fil (15) qui est disposé sur la face interne (16) de chaque fixation (3, 4) en bordure du filet détournée de la partie filet (2), s'étend le long des évidements (10) pratiqués dans la fixation (3, 4) en bordure du filet et est enfilé dans les bords externes des mailles lisière (12) de la partie filet (2),
**caractérisé en ce**
**que** les deux fixations en bordure du filet sont conformées en forme de baguettes en matière plastique (3, 4) réalisées d'un seul tenant et de section approximativement en U,
et **qu'**un deuxième organe de traction (6) élastique est disposé sur le deuxième bord différent desdits bords opposés de la partie filet et est attaché aux baguettes en matière plastique (3, 4).

2. Filet de retenue selon la revendication 1, où des clips de fixation (17) sont formés sur la face interne (16) de la baguette en matière plastique (3, 4), ces clips permettant de fixer le fil (15) qui, à son tour, fixe les bords externes des mailles lisière (12) sur la face interne (16) de la baguette en matière plastique (3, 4).

3. Filet de retenue selon la revendication 1 ou 2, où les évidements (10) pratiqués dans la baguette en matière plastique (3, 4) sont disposés environ au centre de la base (7) de la section en U de la baguette en matière plastique (3, 4).

4. Filet de retenue selon l'une quelconque des revendications 1 à 3, où dans chacune des deux baguettes en matière plastique (3, 4) est ménagé, au-dessus de l'évidement (10) supérieur et en dessous de l'évidement (10) inférieur, un passage (18) au travers duquel l'extrémité de l'organe de traction (5, 6) respectif associée à la portion d'extrémité correspondante de la baguette en matière plastique (3, 4) fait saillie dans le volume interne de la baguette en matière plastique (3, 4) formé par la section en U, chaque extrémité de chaque organe de traction (5, 6) au sein du volume interne de la baguette en matière plastique (3, 4) formé par la section en U étant muni d'une tête de retenue (19) dont le diamètre est supérieur à celui du passage (18).

5. Filet de retenue selon la revendication 4 où l'agencement des deux passages (18) d'une baguette en matière plastique (3, 4) et la longueur du fil (15) associé à la baguette en matière plastique (3, 4) sont choisis de telle sorte que le fil (15) est apte à être fixé dans sa longueur dans la région des baguettes en matière plastique (3, 4) comportant les évidements(10) au moyen des têtes de retenue (19) associées aux deux passages (18) .

6. Filet de retenue selon l'une quelconque des revendications 1 à 5, où au moins une des deux baguettes en matière plastique (3, 4) forme partie constitutive d'un profilé en plastique prévu dans le véhicule automobile, p. ex. un profilé de siège, un profilé de dossier, un profilé de paroi transversale, un profilé d'ouvrant ou similaire.

7. Filet de retenue selon l'une quelconque des revendications 1 à 6, où un bord du filet de retenue (1) formé par l'un des organes de traction (5, 6) est conformé pour être fixé sur une surface d'attache.
